# EUROPÄISCHE PATENTSCHRIFT

(11) **EP 2 639 788 B1**
(45) Veröffentlichungstag und Bekanntmachung des Hinweises auf die Patenterteilung: **27.08.2014**
(21) Anmeldenummer: 12405029.5
(22) Anmeldetag: 15.03.2012
(51) Int. Cl.: G10K 11/00, G01S 7/52, G01S 15/00, G01S 15/04, G01S 15/08

(54) **Ultraschallsensor**
Ultrasound sensor
Capteur ultrasonique

(43) Veröffentlichungstag der Anmeldung: 18.09.2013
(73) Patentinhaber: MT Robot AG, 4222 Zwingen (CH)
(72) Erfinder: Drost, Andreas, 4215 Riehen (CH); Kostal, Peer, 79618 Rheinfelden (DE)
(74) Vertreter: Stäbler, Roman

(56) Entgegenhaltungen:
- DE-A1-102008 001 746
- DE-A1-102009 003 049
- US-A1- 2004 138 568
- US-A1- 2012 039 152

## Beschreibung

### Technisches Gebiet

Die Erfindung betrifft einen Ultraschallsensor mit zwei Ultraschallwandlern und einer Auswerteeinheit, wobei von einem der beiden Ultraschallwandler ein Ultraschallsignal aussendbar ist, welches von dem anderen Ultraschallwandler empfangbar und von der Auswerteeinheit auswertbar ist und wobei die beiden Ultraschallwandler auf einem gemeinsamen Sensorträger montiert sind. Weiter betrifft die Erfindung ein Verfahren zur Funktionsüberprüfung eines Ultraschallsensors und Herstellungsverfahren für einen Ultraschallsensor gemäss den nebengeordneten Ansprüchen.

### Stand der Technik

Ultraschallsensoren werden heutzutage sehr häufig in der Objekterkennung eingesetzt. Gegenüber anderen Sensortypen haben Ultraschallsensoren den Vorteil, dass sie mit Schall messen, wodurch z. B. unterschiedliche Oberflächenbeschaffenheiten von zu erkennenden Objekten wie Rauheit oder Farbe keinen Einfluss auf die Objekterkennung haben. Ausserdem können Ultraschallsensoren einen grösseren Raum auf einmal überwachen, als die meisten optischen Sensoren.

Bei typischen Ultraschallsensoren dient ein Ultraschallwandler gleichzeitig als Sender und als Empfänger. Ein entsprechender Ultraschallsensor ist beispielsweise in der DE 42 18 041 C2 gezeigt. Zuerst sendet dieser Ultraschallwandler einen Ultraschallimpuls oder ein Ultraschallimpulspaket. Anschliessend misst der gleiche Ultraschallwandler das empfangene Echo-Signal. Problematisch ist dabei, dass der Ultraschallwandler lange nachschwingt und dass während der Nachschwingzeit eine Detektion des Echo-Signals unmöglich ist, da das Echo-Signal typischerweise kleiner ist als die Nachschwingung. Durch diese Detetktions-Totzeit während des Nachschwingens ergibt sich beispielsweise bei einer Signalfrequenz des Ultraschallwandlers von 40 kHz ein minimaler Detektionsabstand von etwa 20 cm und bei einer Signalfrequenz des Ultraschallwandlers von 200 kHz ein minimaler Detektionsabstand von etwa 1 cm. Ein minimaler Detektionsabstand von 1 cm mag zwar auf den ersten Blick akzeptabel scheinen; hierbei gilt es jedoch zu beachten, dass die Dämpfung des Schalls im Raum umso stärker ist, je höher die Ultraschallfrequenz ist. Folglich sinkt mit steigender Ultraschallfrequenz zwar der minimale Detektionsabstand, jedoch verringert sich gleichzeitig auch die Grösse des überwachbaren Raums.

Soll - um einen entsprechend grossen Überwachungsraum zu erfassen - mit kleinerer Frequenz von zum Beispiel 40 kHz gemessen und gleichzeitig der minimale Detektionsabstand so klein wie möglich gehalten werden, so kommen typischerweise zwei Ultraschallwandler zum Einsatz, von welchen einer als Sender-Wandler und einer als Empfänger-Wandler arbeitet. Eine solche 2-Wandler-Lösung hat jedoch den Nachteil, dass keine zuverlässige Funktionsüberprüfung des Ultraschallsensors möglich ist. Das Nachschwingen des Sender-Wandlers kann zwar dazu verwendet werden, dessen Funktion zu überwachen. Jedoch ist es nicht möglich, sicherzustellen, dass der Empfänger-Wandler ordnungsgemäss funktioniert und insbesondere ein Signal detektieren würde, wenn sich ein Objekt vor der Sender-Empfänger Anordnung befände.

Das Problem der fehlenden Möglichkeit zur Funktionsüberprüfung kann dadurch gelöst werden, dass insgesamt drei Ultraschallwandler verwendet werden. Hierbei ist neben dem Sender-Wandler und dem Empfänger-Wandler ein Überwachungs-Wandler vorgesehen. Dieser Überwachungs-Wandler überwacht den Sender-Wandler und kann das Signal des Empfänger-Wandlers mithören. Der Aufbau eines solchen 3-Wandler-Ultraschall-Sensors ist jedoch recht aufwendig, da die drei Ultraschallwandler in einem speziellen Gehäuse in einem bestimmten Winkel zueinander angeordnet werden müssen. Damit ist insbesondere auch die Möglichkeit, den Wandler an einem beliebigen Ort einzubauen, beschränkt.

Die US 2009/207006 A1 offenbart ein Verfahren zur Funktionsüberprüfung eines Ultraschallsensors und eine entsprechende Sensoranordnung. Insbesondere zeigt dieses Dokument zwei Ultraschallwandler, welche von einer Autostossstange getragen werden. Einer dieser Ultraschallwandler arbeitet als Empfänger, der andere als Sender. Zur gegenseitigen Funktionsüberprüfung der Ultraschallwandler kann ein über die Autostossstange übertragenes Ultraschallsignal genutzt werden. So wird eine Funktionsüberprüfung der Ultraschallwandler ohne einen dritten Ultraschallwandler ermöglicht. Eine Anwendung dieses Verfahrens in kompakten Ultraschallsensoren ist jedoch problematisch, da bei eng beieinander liegenden Ultraschallwandlern eine einwandfreie Funktion durch Überlagerungen von Echosignalen und Funktionsüberprüfungssignalen am Empfänger zu befürchten stünde. Somit lässt sich das in der US 2009/207006 A1 beschriebene Verfahren nicht ohne weiteres in kompakten Ultraschallsensoren anwenden, bei denen zwei Ultraschallwandler räumlich sehr nah beieinander liegen.

DE 10 2008 001 746 (Denso Corp.) offenbart einen Ultraschallsensor und ein Selbstdiagnoseverfahren für einen Ultraschallsensor. Beim Selbstdiagnoseverfahren wird durch eine erste Empfangsvorrichtung eine Ultraschallwelle ausgesendet, welche durch ein Schallverringerungselement zu einer zweiten Empfangsvorrichtung gelangt und durch diese erfasst wird. Aufgrund des Erfassungssignals lässt sich eine allfällige Fehlfunktion der zweiten Empfangsvorrichtung ermitteln.

US 2012/0039152 (Elekta Limited) beschreibt einen Array aus Sensoren, welches ein Wandlerpaar umfasst. Der erste Wandler ist zum Aussenden eines akustischen Signals und der zweite Wandler zum Empfang des reflektierten Signals ausgelegt, wobei die Wandler akustisch miteinander gekoppelt sind. Dadurch kann das Sensorarray Störungen einzelner Wandlerpaare ohne zusätzliche Elemente zuverlässig detektieren.

### Darstellung der Erfindung

Aufgabe der Erfindung ist es, einen dem eingangs genannten technischen Gebiet zugehörenden Ultraschallsensor zu schaffen, welcher möglichst einfach aufgebaut ist, welcher möglichst vielseitig ist, welcher möglichst kompakt ist, welcher eine zuverlässige Funktionsüberprüfung ermöglicht und welcher gleichzeitig eine zuverlässige Detektion von Objekten, insbesondere von sehr nahen Objekten, ermöglicht.

Die Lösung der Aufgabe ist durch die Merkmale des Anspruchs 1 definiert. Gemäss der Erfindung umfasst ein Ultraschallsensor zwei Ultraschallwandler und eine Auswerteeinheit. Dabei ist von einem der beiden Ultraschallwandler ein Ultraschallsignal aussendbar, welches von dem anderen Ultraschallwandler empfangbar und von der Auswerteeinheit auswertbar ist. Die beiden Ultraschallwandler sind dabei auf einem gemeinsamen Sensorträger montiert. Der Ultraschallsensor umfasst, zusätzlich zum Sensorträger, eine die beiden Ultraschallwandler akustisch miteinander verbindende Akustiksubstanz, wobei ein vom ersten Ultraschallwandler durch die Akustiksubstanz zum zweiten Ultraschallwandler übermittelter Anteil des Ultraschallsignals durch die Akustiksubstanz in charakteristischer Weise veränderbar, insbesondere dämpfbar, ist, und dieser veränderte Anteil des Ultraschallsignals mit der Auswerteeinheit als Prüfsignal identifzierbar ist.

Die Akustiksubstanz umfasst einen Übertragungssteg. Ein solcher Übertragungssteg ist vorteilhafterweise im Wesentlichen quaderförmig oder zylinderförmig oder im Wesentlichen säulenförmig mit im Wesentlichen eliptischem oder asymmetrischem Querschnitt ausgebildet. Der Übertragungssteg verbindet typischerweise die beiden Ultraschallwandler akustisch miteinander und kann zwischen den beiden Ultraschallwandlern angeordnet sein, wobei eine Längsachse des Übertragungsstegs typischerweise im Wesentlichen parallel zu einer Verbindungslinie zwischen zwei geometrischen Mittelpunkten der beiden Ultraschallwandler verläuft. Besonders vorteilhaft ist es, wenn eine Steglänge des Übertragungsstegs 20% bis 80%, bevorzugt 30% bis 70%, besonders bevorzugt 40% bis 60% einer Länge des Ultraschallsensors beträgt. Besonders vorteilhaft ist es, wenn eine Stegbreite des Übertragungsstegs 20% bis 80%, bevorzugt 30% bis 70%, besonders bevorzugt 40% bis 60% einer Breite des Ultraschallsensors bzw. einer Breite der Akustiksubstanz beträgt. Prinzipiell ist es auch möglich, dass die Akustiksubstanz keinen Übertragungssteg umfasst.

Die Akustiksubstanz umfasst einen ersten Aufnahmering und einen zweiten Aufnahmering. Dabei umfasst jeder Aufnahmering typischerweise eine Wandler-Ausnehmung. Mindestens ein Aufnahmering - bevorzugt beide Aufnahmeringe - hat/haben dabei vorteilhafterweise eine Ringdicke von 10% bis 100%, bevorzugt von 20% bis 90%, besonders bevorzugt von 30% bis 80% des Durchmessers der Wandler-Ausnehmung.

Der Übertragungssteg verbindet die beiden Aufnahmeringe miteinander. Eine Akustiksubstanz, welche zwei durch einen Übertragungssteg verbundene Aufnahmeringe umfasst, hat gegenüber einer - beispielsweise - im Wesentlichen rechteckig geformten Akustiksubstanz den Vorteil, dass die Akustiksubstanz aufgrund der stark gewölbten Kontaktflächen zwischen den Aufnahmeringen und den Seitenwänden des Hohlraums besser im Hohlraum fixiert werden und somit besser gegen ein ungewolltes Verrutschen und/oder Herausfallen gesichert werden.

Der erfindungsgemässe Ultraschallsensor hat die Vorteile, dass er einfach aufgebaut, sehr vielseitig und kompakt ist, und dass er sowohl eine zuverlässige Funktionsüberprüfung als auch eine zuverlässige Detektion von Objekten, insbesondere von sehr nahen Objekten, ermöglicht.

Bei vorteilhaften Ausführungsformen ist die Akustiksubstanz in einem einseitig offenen Hohlraum zwischen dem Sensorträger und zumindest einem der beiden Ultraschallwandler angeordnet ist. Besonders vorteilhaft ist es, wenn die Akustiksubstanz zwischen dem Sensorträger und beiden Ultraschallwandlern angeordnet ist. Hierbei trennt vorzugsweise zumindest jeweils ein Teil der Akustiksubstanz sowohl die beiden Wandler unter einander als auch jeden Wandler von dem Sensorträger. Das Anordnen der Akustiksubstanz in einem Hohlraum zwischen dem Sensorträger und zumindest einem der beiden Ultraschallwandler hat den Vorteil, dass eine durch die Akustiksubstanz definierbare akustische Kopplung zwischen diesen Komponenten des Ultraschallsensors erreicht wird. Der Hohlraum muss nicht zwangsläufig einseitig offen sein, vielmehr kann es sich auch um einen geschlossenen oder mehrseitig offenen Hohlraum handeln.

Bei typischen Ausführungsformen umfasst die Akustiksubstanz zumindest eine Wandler-Ausnehmung zur Aufnahme zumindest eines der Ultraschallwandler. Besonders vorteilhaft ist es, wenn die Akustiksubstanz für jeden Ultraschallwandler jeweils eine Wandler-Ausnehmung umfasst. Eine solche Wandler-Ausnehmung hat den Vorteil, dass der in der Wandler-Ausnehmung aufgenommene Ultraschallwandler an einer festen Position innerhalb der Akustiksubstanz angeordnet ist, wodurch eine zuverlässige Funktion des Ultraschallsensors sicher gestellt wird. Es ist jedoch auch möglich, dass die Akustiksubstanz keine Ausnehmung umfasst, sondern dass zumindest ein Ultraschallwandler lediglich auf die Akustiksubstanz aufgesetzt ist.

Bei vorteilhaften Ausführungsformen umfasst die Akustiksubstanz einen Kunststoff und/oder einen Naturstoff. Besonders vorteilhaft ist es, wenn der Kunststoff ein Elastomer umfasst und/oder ein Elastomer ist. Besonders gut geeignete Kunststoffe sind Silikone und/oder Polyurethane, es können jedoch auch andere elastomere Kunststoffe oder auch sonstige Kunststoffe zum Einsatz kommen. Besonders geeignet sind Kunststoffe mit einer spezifischen Schallgeschwindigkeit zwischen 50 m/s und 3000 m/s, bevorzugt zwischen 250 m/s und 2500 m/s, besonders bevorzugt zwischen 500 m/s und 2000 m/s. Besonders geeignet sind Kunststoffe mit einer Dichte zwischen 500 kg/m³ und 2000 kg/m³, bevorzugt zwischen 750 kg/m³ und 1500 kg/m³, besonders bevorzugt zwischen 1000 kg/m³ und 1250 kg/m³. Besonders geeignet sind Kunststoffe mit einer Shore-A-Härte zwischen 15 und 120, bevorzugt zwischen 20 und 110, besonders bevorzugt zwischen 25 und 100. Besonders vorteilhaft ist es, wenn die Akustiksubstanz ein 2-Teil-Silikon umfasst. Bei typischen Ausführungsformen umfasst die Akustiksubstanz einen Schaumstoff und/oder einen Naturstoff wie z. B. Kork. Bei besonders vorteilhaften Ausführungsformen umfasst die Akustiksubstanz Zellkautschuk. Experimente haben gezeigt, dass die Verwendung von Zellkautschuk als Akustiksubstanz gegenüber der Verwendung von Silikon oder Polyurethan als Akustiksubstanz den zusätzlichen Vorteil hat, dass Zellkautschuk federnde Eigenschaften hat. Unter "federnden Eigenschaften" ist hier zu verstehen, dass ein Material unter Druck nachgibt und bei nachlassendem Druck in seine ursprüngliche Form zurückkehrt. Die federnden Eigenschaften von Zellkautschuk können auf vorteilhafte Weise dazu genutzt werden, die Ultraschallwandler fest und sicher in der Akustiksubstanz zu fixieren. Dazu wird die Wandler-Ausnehmung typischerweise derart dimensioniert, dass sie kleiner ist als der von ihr aufzunehmende Wandler. Beim Einbau des Wandlers kann die Wandler-Ausnehmung aufgrund der federnden Eigenschaften des Zellkautschuks mechanisch aufgeweitet werden. Sobald der Wandler in die Wandler-Ausnehmung eingesetzt ist, führen dann eben diese federnden Eigenschaften dazu, dass der Wandler fest und sicher von der Akustiksubstanz umschlossen wird. Alternativ zu Zellkautschuk ist mit Vorteil auch eine Verwendung von Moosgummi oder einem Werkstoff mit vergleichbaren mechanischen und/oder chemischen Eigenschaften möglich. Besonders vorteilhaft ist es, wenn der Zellkautschuk auf Basis von Ethylen-Propylen-Dien-Monomer (EPDM) hergestellt ist. Bei vorteilhaften Ausführungsformen hat der Zellkautschuk und/oder der Moosgummi eine Shore-00-Härte zwischen 20 und 70, vorzugsweise zwischen 25 und 65, bevorzugt zwischen 30 und 60, besonders bevorzugt zwischen 35 und 55. Versuche haben gezeigt, dass vor allem Zellkautschuk und/oder Moosgummi mit einer Shore-00-Härte von ungefähr 40 besonders vorteilhaft ist. Die Dichte des Zellkautschuks und/oder des Moosgummis liegt vorzugsweise zwischen 80 kg/m³ und 200 kg/m³, vorzugsweise zwischen 110 kg/m³ und 170 kg/m³ bevorzugt zwischen 130 kg/m³ und 150 kg/m³. Besonders vorteilhaft ist es, wenn der Zellkautschuk und/oder der Moosgummi eine Dichte von ungefähr 140 kg/m³ hat.

Entscheidend bei der Auswahl des Materials der Akustiksubstanz ist, dass das Material Dämpfungs- und Schallleitungseigenschaften aufweist, die es ermöglichen, ein akustisches Signal derart von dem Sender-Wandler zu dem Empfänger-Wandler zu leiten, dass es einerseits, insbesondere was seine Amplitude angeht, kleiner ist, als Echo-Signale von zu detektierenden Objekten und andererseits aber noch gross genug ist, um vom Empfänger-Wandler zuverlässig detektiert zu werden. Die Verwendung eines solchen Kunststoffs und/oder Naturstoffs zumindest als Teil der Akustiksubstanz hat den Vorteil, dass eine besonders vorteilhafte Dämpfung eines Ultraschallsignals ermöglicht wird und dass insbesondere sehr kleine minimale Detektionsabstände und sehr kleine Abmessungen des erfindungsgemässen Ultraschallsensors ermöglicht werden. Es ist jedoch prinzipiell auch denkbar, eine Metallverbindung oder ein Gas und/oder einen keramischen Werkstoff zumindest als Teil der Akustiksubstanz zu verwenden.

Bei typischen Ausführungsformen ist zumindest einer der Ultraschallwandler, bevorzugt beide Ultraschallwandler, in der Akustiksubstanz eingegossen. Dies hat den Vorteil, dass eine besonders enge und homogene Verbindung zwischen dem Ultraschallwandler und der Akustiksubstanz ermöglicht wird, da die - typischerweise zu Beginn eines Eingussvorgangs zunächst flüssige - Akustiksubstanz den Ultraschallwandler komplett umfliesst und anschliessend aushärtet. Besonders vorteilhaft ist es, wenn beide Ultraschallwandler in der Akustiksubstanz eingegossen sind.

Bei weiteren typischen Ausführungsformen ist zumindest einer der Ultraschallwandler in die Akustiksubstanz eingesetzt. Hierbei kommt typischerweise eine Akustiksubstanz zum Einsatz, welche bereits zu Beginn eines Fertigungsvorgangs in fester Form vorliegt, wobei zumindest eine der Ausnehmungen auch bereits von der Akustiksubstanz umfasst ist. Eine solche Ausführungsform mit zumindest einem eingesetzten Ultraschallwandler hat den Vorteil, dass die Form der Ausnehmung genau vorgebbar ist und somit ein Formschluss zwischen Akustiksubstanz und Ultraschallwandler sehr gut kontrollierbar ist. In diesem Zusammenhang ist es besonders vorteilhaft, wenn die Ausnehmung in leerem Zustand - das heisst wenn der Ultraschallwandler nicht eingesetzt ist - kleiner ist, als der Ultraschallwandler. Bei einem runden Ultraschallwandler ist der Durchmesser der Ausnehmung kleiner als der Durchmesser des Ultraschallwandlers. Beim Einsetzen des Ultraschallwandlers in die Ausnehmung wird dann die Akustiksubstanz in der Nähe eines Randes der Ausnehmung derart komprimiert, dass sich die Ausnehmung gerade soweit aufweitet, dass der Ultraschallwandler in ihr Platz hat. Dabei ist der Ultraschallwandler typischerweise im Wesentlichen spielfrei in der Ausnehmung eingequetscht. Besonders vorteilhaft ist es, wenn beide Ultraschallsensoren in die Akustiksubstanz eingesetzt sind. Bei typischen Ausführungsformen hat der Sensorträger eine im Wesentlichen quaderförmige Aussenform, wobei die Ultraschallsensoren vorteilhafterweise über die Aussenform und/oder den Sensorträger herausragen, insbesondere 1 mm bis 12 mm, bevorzugt 1,5 mm bis 10 mm, besonders bevorzugt 2 mm bis 8 mm. Dadurch ergibt sich der Vorteil, dass bei einer Montage des Ultraschallsensors in einem Gerät mit einem Gerätegehäuse die Ultraschallsensoren in Öffnungen des Gerätegehäuses hinein- bzw. sogar durch diese hindurchragen können, wobei der Sensorträger an einer Innenseite des Gehäuses anschlägt. Alternativ ist es auch möglich, dass die Ultraschallsensoren auf gleicher Höhe wie der Sensorträger abschliessen bzw. sogar von dem Sensorträger überragt werden.

Bei typischen Ausführungsformen beträgt ein Abstand zwischen den Ultraschallwandlern 20% bis 80%, bevorzugt 30% bis 70%, besonders bevorzugt 40% bis 60% der Länge des Ultraschallsensors. Versuche haben gezeigt, dass bei einem solchen Grössenverhältnis ein besonders günstiges Verhältnis zwischen Funktionalität, Dimensionierung und Kosten des Ultraschallsensors erreichbar ist. Alternativ können die Ultraschallwandler auch näher beieinander oder weiter entfernt voneinander angeordnet sein. Dies kann bei bestimmten Anwendungsfällen durchaus Sinn machen.

Bei typischen Ausführungsformen ist einer der Ultraschallwandler ein Sender-Wandler und der andere ein Empfänger-Wandler. Dies hat den Vorteil, dass sich auf diese Weise der Aufbau der Ultraschallsensors stark vereinfacht, da der Sender-Wandler lediglich über eine Sendersteuerung und der Empfänger-Wandler lediglich über eine Empfänger-Steuerung verfügen muss. Alternativ dazu ist es jedoch auch möglich, dass beide Ultraschallwandler prinzipiell sowohl senden als auch empfangen können.

Bei vorteilhaften Ausführungsformen beträgt ein Winkel zwischen einer Ausrichtungsrichtung des Sender-Wandlers und einer Ausrichtungsrichtung des Empfänger-Wandlers 0 bis 20 Grad, bevorzugt 0 bis 15 Grad, besonders bevorzugt 0 bis 10 Grad. Vorzugsweise sind der Sender-Wandler und der Empfänger-Wandler im Wesentlichen in die selbe Richtung ausgerichtet, d. h. die Flächennormalen von jeweils einer Wandleroberfläche eines der beiden Ultraschallwandlers verlaufen im Wesentlichen parallel. Eine derartige Ausrichtung des Sender-Wandlers und Empfänger-Wandlers hat den Vorteil, dass ein guter Kompromiss zwischen der Grösse eines Überwachungsraums und einer Zuverlässigkeit des Ultraschallsensors erreicht wird.

Bei einem erfindungsgemässen Verfahren zur Funktionsprüfung eines Ultraschallsensors, wird ein Ultraschallsignal von einem ersten Ultraschallwandler des Ultraschallsensors ausgesendet und von einem zweiten Ultraschallwandler des Ultraschallsensors empfangen. Dabei wird ein erster Anteil des Ultraschallsignals ausserhalb des Ultraschallsensors vom ersten zum zweiten Ultraschallwandler übermittelt. Ein zweiter Anteil des Ultraschallsignals wird dabei durch eine die beiden Ultraschallwandler akustisch miteinander verbindende Akustiksubstanz vom ersten zum zweiten Ultraschallwandler übermittelt, wobei die Akustiksubstanz den zweiten Anteil des Ultraschallsignals in charakteristischer Weise verändert, so dass den zweiten Ultraschallwandler ein definiertes Prüfsignal erreicht und in dem vom zweiten Ultraschallwandler empfangenen Prüfsignal der zweite, von der Akustiksubstanz veränderte Anteil des Ultraschallsignals identifiziert und/oder detektiert wird.

Bei einem erfindungsgemässen Verfahren zur Herstellung eines Ultraschallsensors umfassend einen Sender-Wandler und einen Empfänger-Wandler, wobei der Sender-Wandler und der Empfänger-Wandler auf einem gemeinsamen Sensorträger montiert sind, wird zunächst eine flüssige Akustiksubstanz in einen einseitig offenen Hohlraum zwischen den Wandlern und dem Sensorträger eingebracht, welche anschliessend zumindest teilweise aushärtet.

Bei einem weiteren vorteilhaften Verfahren zur Herstellung eines Ultraschallsensors umfassend einen Sender-Wandler und einen Empfänger-Wandler, wobei der Sender-Wandler und der Empfänger-Wandler auf einem gemeinsamen Sensorträger montiert sind, wird eine feste Akustiksubstanz mit zwei Wandler-Ausnehmungen in einen einseitig offenen Hohlraum zwischen den Wandlern und dem Sensorträger eingesetzt, wobei der Sender-Wandler und der Empfänger-Wandler in jeweils einer Wandler-Ausnehmung spielfrei festgelegt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1:: Eine schematische Draufsicht eines erfindungsgemässen Ultraschallsensors,
- Fig. 2:: eine schematische Seitenansicht eines erfindungsgemässen Ultraschallsensors,
- Fig. 3:: eine schematische schräge Perspektivansicht eines erfindungsgemässen Ultraschallsensors,
- Fig. 4:: eine schematische Rückansicht eines erfindungsgemässen Ultraschallsensors,
- Fig. 5:: eine schematische Ansicht eines in einem Gerät montierten Ultraschallsensors und
- Fig. 6:: eine schematische Darstellung der Funktion eines erfindungsgemässen Ultraschallsensors.

Grundsätzlich sind in den Figuren gleiche Teile mit gleichen Bezugszeichen versehen.

### Wege zur Ausführung der Erfindung

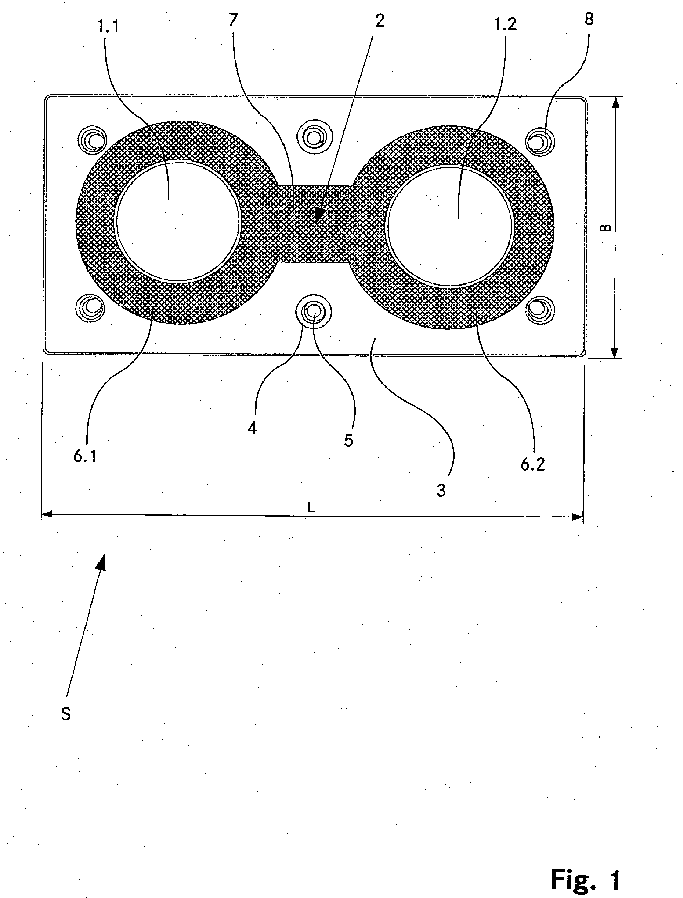

In Figur 1 ist eine schematische Draufsicht eines erfindungsgemässen Ultraschallsensors S gezeigt. Der Ultraschallsensor S umfasst zwei Ultraschallwandler 1.1 und 1.2, von welchen einer als Sender-Wandler und einer als Empfänger-Wandler konfiguriert ist. Die Ultraschallwandler 1.1 und 1.2 sind in einer Akustiksubstanz 2 vergossen, welche die Ultraschallwandler 1.1 und 1.2 von einem Sensorträger 3 trennt. Der Sensorträger 3 umfasst zwei Montagebohrungen 4 und ist mit Hilfe von zwei Befestigungsmitteln 5, welche die Montagebohrungen 4 durchgreifen, mit einer in Figur 1 nicht erkennbaren Platine verbunden. Die Akustiksubstanz 2 separiert sowohl die beiden Ultraschallwandler 1.1 und 1.2 voneinander, als auch jeden der Ultraschallwandler 1.1 und 1.2 von dem Sensorträger 3 und der Platine. Die Akustiksubstanz 2 umfasst zwei Aufnahmeringe 6.1 und 6.2, welche über einen Übertragungssteg 7 miteinander verbunden sind. Der Sensorträger 3 umfasst vier Befestigungsbohrungen 8, mit deren Hilfe der Ultraschallsensor in oder an einem in Figur 1 nicht näher gezeigten Gerät befestigt werden kann. Die in Figur 1 gezeigte Ausführungsform des erfindungsgemässen Ultraschallsensors S hat eine Länge L und eine Breite B, wobei das Verhältnis Länge:Breite 2:1 beträgt. Ein mögliches konkretes Verhältnis Länge:Breite ist 60mm:30mm.

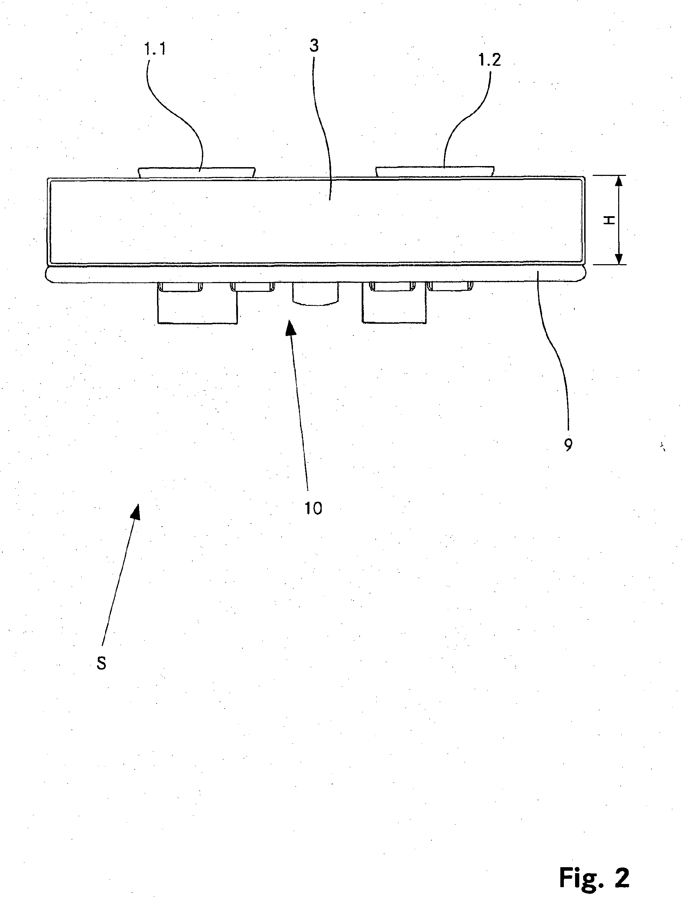

Figur 2 zeigt eine schematische Seitenansicht des erfindungsgemässen Ultraschallsensors S. In Figur 2 ist erkennbar, dass auf einer Rückseite des Sensorträgers 3 eine Platine 9 mit einer Elektronik 10, umfassend unter anderem eine nicht näher gekennzeichnete Auswerteeinheit, befestigt ist. Der Sensorträger hat eine Höhe H. Ein Verhältnis Breite(siehe Figur 1):Höhe des Sensorträgers beträgt bei dem gezeigten Ausführungsbeispiel 3:1. In Figur 2 ist weiterhin erkennbar, dass die Ultraschallwandler 1.1 und 1.2 ein Stück weit (ca. 2 mm bis 3 mm) über den Sensorträger 2 hinausragen.

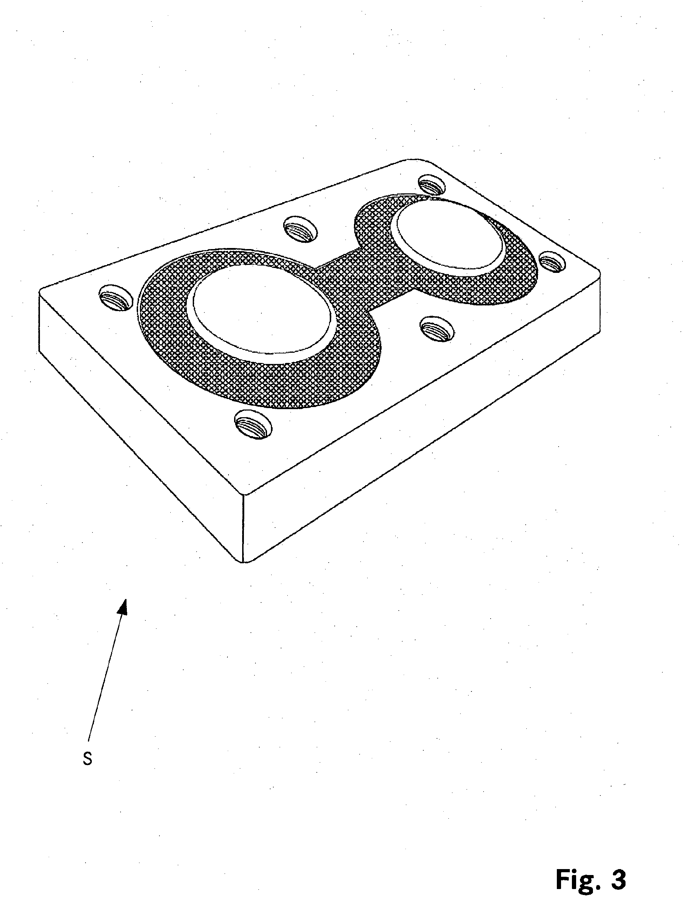

Figur 3 zeigt eine schematische schräge Perspektivansicht des erfindungsgemässen Ultraschallsensors S.

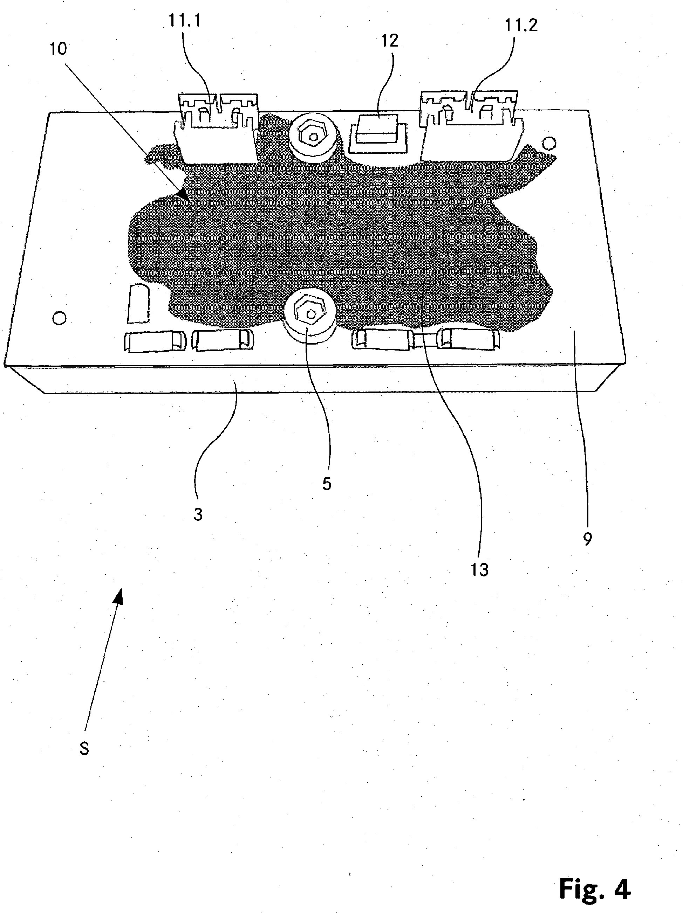

Figur 4 zeigt eine schematische Rückansicht des erfindungsgemässen Ultraschallsensors S. In Figur 4 sind die zwei Befestigungsmittel 5 erkennbar, mit Hilfe derer die Platine 9 an dem Sensorträger 3 befestigt ist. Die Platine 9 umfasst die Elektronik 10, welche zumindest eine nicht näher gekennzeichnete Auswerteeinheit, zwei Anschlussports 11, eine Spule 12 und eine Schutzgummierung 13, welche die Elektronik 10 zumindest teilweise bedeckt, umfasst.

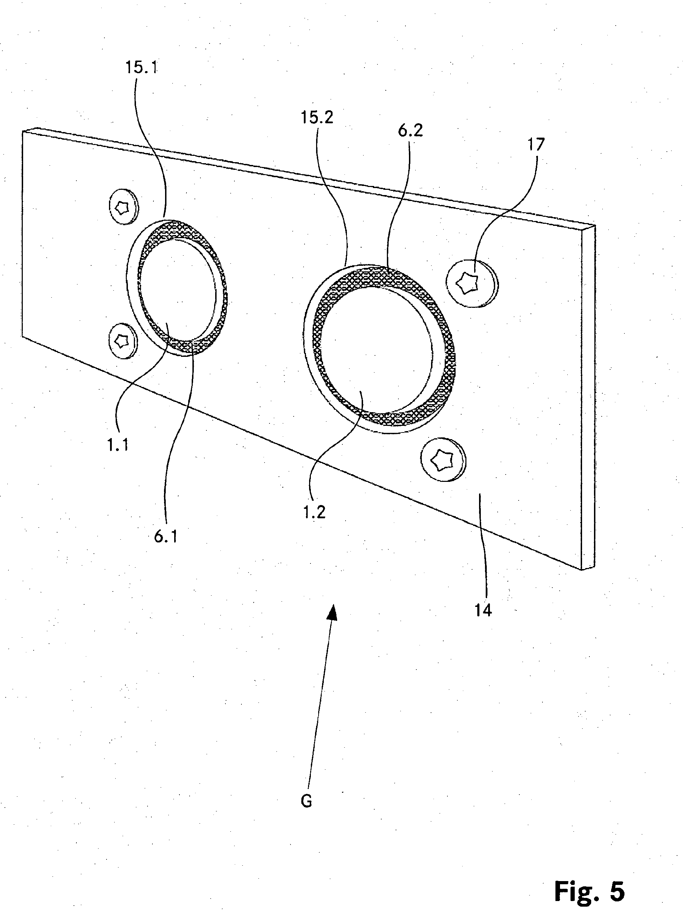

Figur 5 zeigt eine schematische Ansicht eines in einem Gerät G montierten Ultraschallsensors S. Ein Gerätegehäuse 14 umfasst dabei zwei Wandleröffnungen 15.1 und 15.2, in welche jeweils ein Ultraschallwandler 1.1 bzw. 1.2 eingreift. Der Ultraschallsensor S, welcher die Ultraschallwandler 1.1 und 1.2 umfasst, ist mit Hilfe von vier Befestigungsschrauben 16 an einer Innenseite des Gehäuses G befestigt. Die Befestigungsschrauben 17 sind in die vier Befestigungsbohrungen 8 (siehe Figur 1) eingedreht.

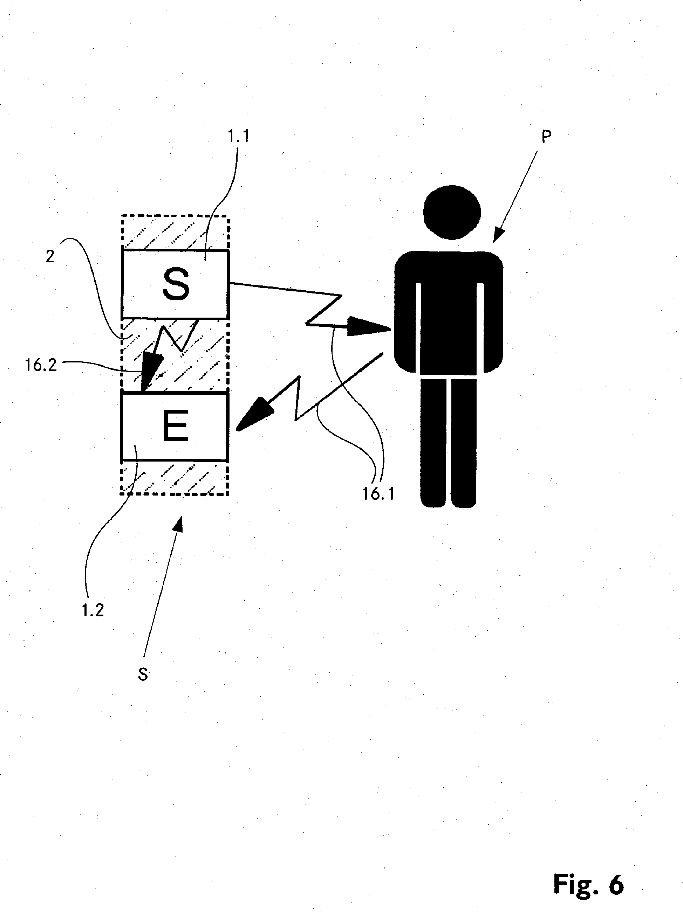

Die Funktion des erfindungsgemässen Ultraschallwandlers S ist in Figur 6 visualisiert. Die zwei Ultraschallwandler 1.1 und 1.2, welche in die akustisch leitende aber gleichzeitig geeignete Dämpfungseigenschaften aufweisende Akustiksubstanz 2 eingebettet sind, können zum einen dazu genutzt werden, Objekte in einem Überwachungsraum des Ultraschallsensors S zu erkennen, und zum anderen dazu, eine Funktionsüberprüfung des Ultraschallsensors S durchzuführen. Die Funktionsweise der Erfindung ist wie folgt (für die folgenden Erklärungen wird angenommen, dass der Ultraschallwandler 1.1 ein Sender-Wandler und der Ultraschallwandler 1.2 ein Empfänger-Wandler ist): Wenn der Sender-Wandler 1.1 ein Ultraschallsignal aussendet, so pflanzt sich dieses Ultraschallsignal auf zwei Wegen fort. Ein erster Teil 16.1 des Ultraschallsignals pflanzt sich in dem Überwachungsraum des Ultraschallsensors S fort und kann dort beispielsweise ein Person P treffen. Dieser erste Teil 16.1 des Ultraschallsignals wird dann an der Person P reflektiert und als Echo-Signal zurück zum Empfänger-Wandler 1.2 geleitet. Der Empfänger-Wandler 1.2 kann im Zusammenspiel mit der Elektronik 10 aus der Stärke des Echo-Signals und den ihm bekannten physikalischen Eigenschaften des Überwachungsraums - beispielsweise Luft - den Abstand der Person P von dem Ultraschallsensor S ermitteln oder einfach nur die Präsenz der Person P detektieren. Zusätzlich zum ersten Teil 16.1 des Ultraschallsignals, welcher sich in den Überwachungsraum hinein ausbreitet, breitet sich ein zweiter Teil 16.2 des Ultraschallsignals in die Akustiksubstanz 2 hinein aus. Die Materialeigenschaften der Akustiksubstanz 2 sind so gewählt, dass der zweite Teil 16.2 des Ultraschallsignals auf seinem Weg vom Sender-Wandler 1.1 zum Empfänger-Wandler soweit gedämpft wird, dass er von dem Empfänger-Wandler zwar noch eindeutig als Prüfsignal detektierbar ist, dass er jedoch niemals grösser ist, als ein Echo-Signal von einem im Überwachungsraum des Ultraschallsensors S befindlichen Objekt, z. B. einer Person P.

Der Betrieb des Ultraschallsensors S stellt sich typischerweise so dar, dass der Empfänger-Wandler in periodischen Abständen Ultraschallsignale aussendet, welche sich jeweils in einen ersten Teil 16.1 - abgestrahlt in den Überwachungsraum hinein - und einen zweiten Teil 16.2 - abgestrahlt in die Akustiksubstanz 2 hinein - aufspalten. Am Empfänger-Wandler 1.2 trifft somit nach einer bekannten Zeitspanne ein nach Form und Stärke bekanntes Prüfsignal, nämlich der von der Akustiksubstanz gedämpfte zweite Teil 16.2 des vom Sender-Wandler 1.1 ausgesendeten Ultraschallsignals, ein. Wird dieses Prüfsignal zu einem bestimmten Zeitpunkt während des Betriebs des Ultraschallsensors S nicht detektiert, so ist entweder der Sender-Wandler 1.1 oder ein zur Generierung der Ultraschallimpulse dienender Teil der Elektronik 10 oder der Empfänger-Wandler 1.2 oder ein zum Erkennen des Prüfsignals dienender Teil der Elektronik 10 defekt. Mit dieser Methode kann also sichergestellt werden, dass ein Objekt, wenn es in den Überwachungsraum des Ultraschallsensors käme, erkannt werden würde. Damit werden also sowohl der Sender als auch der Empfänger fortlaufend auf korrekte Funktion untersucht. Wenn sich im Überwachungsraum des Ultraschallsensors S ein Objekt - z. B. die in Figur 6 gezeigte Person P - befindet, so kommt eine gewisse Zeit nach dem Aussenden des Ultraschallsignals durch den Sender-Wandler 1.1 zusätzlich zu dem Prüfsignal - basierend auf dem zweiten Teil 16.2 des Ultraschallsignals - ein Echo-Signal - basierend auf dem ersten Teil 16.1 des Ultraschallsignals - an. Durch die Materialeigenschaften der Akustiksubstanz 2 ist gewährleistet, dass ein solches Echo-Signal eines im Überwachungsraum des Ultraschallsensors befindlichen Objekts stets grösser ist, als das Prüfsignal. Somit kann der Ultraschallsensor S aus der Detektion eines Signals, welches, grösser als das wohlbekannte Prüfsignal ist, stets auf die Präsenz eines Objekts im Überwachungsraum schliessen und ggf. seinen Abstand bestimmen.

Bei der Fertigung des erfindungsgemässen Ultraschallsensors S werden zuerst die Ultraschallwandler 1.1 und 1.2 mit der Platine 9 und der Elektronik 10 verbunden. Dann wird der Sensorträger 3 mit Hilfe der Befestigungsmittel 5 auf die Platine 9 aufgeschraubt. Anschliessend wird ein in diesem Fertigungsstadium vorhandener einseitig offener Hohlraum zwischen dem Sensorträger 3 und den Ultraschall-Wandlern 1.1 und 1.2 mit der in diesem Fertigungsstadium flüssigen Akustiksubstanz 2 verfüllt, wodurch die Ultraschallwandler 1.1 und 1.2 in der Akustiksubstanz 2 vergossen werden. Die zunächst flüssige Akustiksubstanz 2 härtet dann nach und nach aus.

Zusammenfassend ist festzustellen, dass die Erfindung sowohl die zuverlässige Detektion von Objekten im Überwachungsraum des Ultraschallsensors S sicher stellt, wobei auch sehr nahe Objekte zuverlässig erkennbar sind, als auch gleichzeitig eine einfache und zuverlässige periodische Funktionsüberprüfung des Ultraschallsensors S ermöglicht. Auch eine einmalige Funktionsüberprüfung ausserhalb eines regulären Überwachungsbetriebs ist möglich.

## Patentansprüche

1. Ultraschallsensor (S), wobei
der Ultraschallsensor (S) zwei Ultraschallwandler (1.1, 1.2) umfasst,
- der Ultraschallsensor eine Auswerteeinheit umfasst,
- von einem der beiden Ultraschallwandler (1.1, 1.2) ein Ultraschallsignal aussendbar ist, welches von dem anderen Ultraschallwandler (1.1, 1.2) empfangbar und von der Auswerteeinheit auswertbar ist und
- die beiden Ultraschallwandler (1.1, 1.2) auf einem gemeinsamen Sensorträger (3) montiert sind,
- der Ultraschallsensor (S) zusätzlich zum Sensorträger eine die beiden Ultraschallwandler (1.1, 1.2) akustisch miteinander verbindende Akustiksubstanz (2) umfasst, wobei ein vom ersten Ultraschallwandler (1.1, 1.2) durch die Akustiksubstanz (2) zum zweiten Ultraschallwandler (1.1, 1.2) übermittelten Anteil (16.2) des Ultraschallsignals durch die Akustiksubstanz (2) veränderbar ist, und dieser veränderte Anteil (16.2) des Ultraschallsignals als Prüfsignal mit der Auswerteeinheit identifizierbar ist,
**dadurch gekennzeichnet, dass** die Akustiksubstanz (2) einen ersten Aufnahmering (6.1) und einen zweiten Aufnahmering (6.2) zur Aufnahme der Ultraschallwandler (1.1, 1.2) umfasst, wobei die Akustiksubstanz einen Verbindungssteg (7) aufweist, der den ersten Aufnahmering (6.1) mit dem zweiten Aufnahmering (6.2) verbindet.

2. Ultraschallsensor (S) nach Anspruch 1, **dadurch gekennzeichnet, dass** die Akustiksubstanz (2) in einem einseitig offenen Hohlraum zwischen dem Sensorträger (3) und zumindest einem der beiden Ultraschallwandler (1.1, 1.2) angeordnet ist.

3. Ultraschallsensor nach einem der vorhergehenden Ansprüche, **dadurch gekennzeichnet, dass** die Akustiksubstanz (2) einen Kunststoff umfasst.

4. Ultraschallsensor (S) nach einem der vorhergehenden Ansprüche, **dadurch gekennzeichnet, dass** zumindest einer der Ultraschallwandler (1.1, 1.2) in der Akustiksubstanz (2) eingegossen ist.

5. Ultraschallsensor (S) nach einem der vorhergehenden Ansprüche, **dadurch gekennzeichnet, dass** zumindest einer der Ultraschallwandler (1.1, 1.2) in die Akustiksubstanz eingesetzt ist.

6. Ultraschallsensor (S) nach einem der vorhergehenden Ansprüche, **dadurch gekennzeichnet, dass** die Ultraschallsensoren (1.1, 1.2) über den Sensorträger (3) herausragen, insbesondere 1 bis 12 mm.

7. Ultraschallsensor (S) nach einem der vorhergehenden Ansprüche, **dadurch gekennzeichnet, dass** ein Abstand zwischen den Ultraschallwandlern (1.1, 1.2) 20% bis 80% einer Länge (L) des Ultraschallsensors (S) beträgt.

8. Ultraschallsensor (S) nach einem der vorhergehenden Ansprüche, **dadurch gekennzeichnet, dass** einer der Ultraschallwandler (1.1, 1.2) ein Sender-Wandler (1.1) und der andere ein Empfänger-Wandler (1.2) ist.

9. Ultraschallsensor (S) nach einem der vorhergehenden Ansprüche, **dadurch gekennzeichnet, dass** ein Winkel zwischen einer Ausrichtungsrichtung des Sender-Wandlers (1.1) und einer Ausrichtungsrichtung des Empfänger-Wandlers (1.2) 0 bis 20 Grad beträgt.

10. Verfahren zur Funktionsprüfung eines Ultraschallsensors (S) nach einem der Ansprüche 1 bis 9, wobei ein Ultraschallsignal von einem ersten Ultraschallwandler (1.1, 1.2) des Ultraschallsensors (S) ausgesendet und von einem zweiten Ultraschallwandler (1.1, 1.2) des Ultraschallsensors (S) empfangen wird, wobei ein erster Anteil (16.1) des Ultraschallsignals ausserhalb des Ultraschallsensors (S) vom ersten zum zweiten Ultraschallwandler (1.1, 1.2) übermittelt wird, **dadurch gekennzeichnet, dass** ein zweiter Anteil (16.2) des Ultraschallsignals durch eine die beiden Ultraschallwandler (1.1, 1.2) akustisch miteinander verbindende Akustiksubstanz (2) vom ersten zum zweiten Ultraschallwandler (1.1, 1.2) übermittelt wird, wobei die Akustiksubstanz (2) den zweiten Anteil (16.2) des Ultraschallsignals verändert und in einem vom zweiten Ultraschallwandler (1.1, 1.2) empfangenen Prüfsignal der zweite, von der Akustiksubstanz veränderte Anteil (16.2) des Ultraschallsignals identifiziert wird.

11. Verfahren zur Herstellung eines Ultraschallsensors (S) umfassend einen Sender-Wandler (1.1) und einen Empfänger-Wandler (1.2), wobei der Sender-Wandler (1.1) und der Empfänger-Wandler (1.2) auf einem gemeinsamen Sensorträger (3) montiert sind, und wobei eine Akustiksubstanz (2) in einen einseitig offenen Hohlraum zwischen den Wandlern (1.1, 1.2) und dem Sensorträger (3) eingebracht wird, wobei die Akustiksubstanz (2) insbesondere in einem flüssigen Zustand in den Hohlraum eingebracht und anschliessend zumindest teilweise ausgehärtet wird, **dadurch gekennzeichnet, dass** die Ultraschallwandler (1.1, 1.2) in einen ersten Aufnahmering (6.1) und in einen zweiten Aufnahmering (6.2) der Akustiksubtanz (2) eingelegt werden, wobei ein Verbindungssteg (7) den ersten Aufnahmering (6.1) mit dem zweiten Aufnahmering (6.2) verbindet.

12. Verfahren zur Herstellung eines Ultraschallsensors (S) umfassend einen Sender-Wandler und (1.1) einen Empfänger-Wandler (1.2), wobei der Sender-Wandler (1.1) und der Empfänger-Wandler (1.2) auf einem gemeinsamen Sensorträger (3) montiert sind und wobei eine feste Akustiksubstanz (2) mit zwei Wandler-Ausnehmungen in einen einseitig offenen Hohlraum zwischen den Wandlern (1.1, 1.2) und dem Sensorträger (3) eingesetzt wird, wobei der Sender-Wandler (1.1) und der Empfänger-Wandler (1.2) in jeweils einer Wandler-Ausnehmung im Wesentlichen spielfrei festgelegt werden, **dadurch gekennzeichnet, dass** die Ultraschallwandler (1.1, 1.2) in einen ersten Aufnahmering (6.1) und in einen zweiten Aufnahmering (6.2) der Akustiksubtanz (2) eingelegt werden, wobei ein Verbindungssteg (7) den ersten Aufnahmering (6.1) mit dem zweiten Aufnahmering (6.2) verbindet.

## Claims

1. Ultrasound sensor (S), wherein
- the ultrasound sensor (S) comprises two ultrasound transducers (1.1, 1.2),
- the ultrasound sensor comprises an evaluation unit,
- an ultrasound signal can be emitted from one of the two ultrasound transducers (1.1, 1.2) and this signal can be received by the other ultrasound transducer (1.1, 1.2) and can be evaluated by the evaluation unit and
- the two ultrasound transducers (1.1, 1.2) are mounted on a common sensor carrier (3),
- the ultrasound sensor (s) comprises in addition to the sensor carrier an acoustic substance (2) acoustically connecting the two ultrasound transducers (1.1, 1.2) to one another, wherein a component (16.2) of the ultrasound signal that is transmitted from the first ultrasound transducer (1.1, 1.2) to the second ultrasound transducer (1.1, 1.2) through the acoustic substance (2) can be modified by the acoustic substance (2), and this modified component (16.2) of the ultrasound signal can be identified by the evaluation unit as a test signal,
**characterized in that** the acoustic substance (2) comprises a first holding ring (6.1) and a second holding ring (6.2) for holding the ultrasound transducers (1.1, 1.2), wherein the acoustic substance has a connecting web (7), which connects the first holding ring (6.1) to the second holding ring (6.2).

2. Ultrasound sensor (S) according to Claim 1, **characterized in that** the acoustic substance (2) is arranged in a cavity that is open on one side between the sensor carrier (3) and at least one of the two ultrasound transducers (1.1, 1.2).

3. Ultrasound sensor according to one of the preceding claims, **characterized in that** the acoustic substance (2) comprises a plastic.

4. Ultrasound sensor (S) according to one of the preceding claims, **characterized in that** at least one of the ultrasound transducers (1.1, 1.2) is cast in the acoustic substance (2).

5. Ultrasound sensor (S) according to one of the preceding claims, **characterized in that** at least one of the ultrasound transducers (1.1, 1.2) is fitted in the acoustic substance.

6. Ultrasound sensor (S) according to one of the preceding claims, **characterized in that** the ultrasound sensors (1.1, 1.2) protrude beyond the sensor carrier (3), in particular by 1 to 12 mm.

7. Ultrasound sensor (S) according to one of the preceding claims, **characterized in that** a distance between the ultrasound transducers (1.1, 1.2) is 20% to 80% of a length (L) of the ultrasound sensor (S).

8. Ultrasound sensor (S) according to one of the preceding claims, **characterized in that** one of the ultrasound transducers (1.1, 1.2) is a transmitter transducer (1.1) and the other is a receiver transducer (1.2).

9. Ultrasound sensor (S) according to one of the preceding claims, **characterized in that** an angle between a direction of alignment of the transmitter transducer (1.1) and a direction of alignment of the receiver transducer (1.2) is 0 to 20 degrees.

10. Method for functionally testing an ultrasound sensor (S) according to one of Claims 1 to 9, wherein an ultrasound signal is emitted from a first ultrasound transducer (1.1, 1.2) of the ultrasound sensor (S) and is received by a second ultrasound transducer (1.1, 1.2) of the ultrasound sensor (S), wherein a first component (16.1) of the ultrasound signal is transmitted from the first to the second ultrasound transducer (1.1, 1.2) outside the ultrasound sensor (S), **characterized in that** a second component (16.2) of the ultrasound signal is transmitted from the first to the second ultrasound transducer (1.1, 1.2) through an acoustic substance (2) acoustically connecting the two ultrasound transducers (1.1, 1.2) to one another, wherein the acoustic substance (2) modifies the second component (16.2) of the ultrasound signal and the second component (16.2), modified by the acoustic substance, of the ultrasound signal is identified in a test signal received by the second ultrasound transducer (1.1, 1.2).

11. Method for producing an ultrasound sensor (S) comprising a transmitter transducer (1.1) and a receiver transducer (1.2), wherein the transmitter transducer (1.1) and the receiver transducer (1.2) are mounted on a common sensor carrier (3), and wherein an acoustic substance (2) is introduced into a cavity that is open on one side between the transducers (1.1, 1.2) and the sensor carrier (3), wherein the acoustic substance (2) is introduced into the cavity in particular in a liquid state and subsequently is at least partially cured, **characterized in that** the ultrasound transducers (1.1, 1.2) are placed into a first holding ring (6.1) and into a second holding ring (6.2) of the acoustic substance (2), wherein a connecting web (7) connects the first holding ring (6.1) to the second holding ring (6.2).

12. Method for producing an ultrasound sensor (S) comprising a transmitter transducer (1.1) and a receiver transducer (1.2), wherein the transmitter transducer (1.1) and the receiver transducer (1.2) are mounted on a common sensor carrier (3) and wherein a solid acoustic substance (2) with two transducer recesses is fitted into a cavity that is open on one side between the transducers (1.1, 1.2) and the sensor carrier (3), wherein the transmitter transducer (1.1) and the receiver transducer (1.2) are each fixed substantially free from play in a transducer recess, **characterized in that** the ultrasound transducers (1.1, 1.2) are placed into a first holding ring (6.1) and into a second holding ring (6.2) of the acoustic substance (2), wherein a connecting web (7) connects the first holding ring (6.1) to the second holding ring (6.2).

## Revendications

1. Détecteur à ultrasons (S)
- le détecteur à ultrasons (S) comprenant deux transducteurs d'ultrasons (1.1, 1.2),
- le détecteur à ultrasons comprenant une unité d'interprétation,
- un signal ultrasonique pouvant être émis depuis l'un des deux transducteurs d'ultrasons (1.1, 1.2), lequel peut être reçu par l'autre transducteur d'ultrasons (1.1, 1.2) et peut être interprété par l'unité d'interprétation et
- les deux transducteurs d'ultrasons (1.1, 1.2) étant montés sur un porte-détecteur (3) commun,
- le détecteur à ultrasons (S) comprenant, en plus du porte-détecteur, une substance acoustique (2) qui relie acoustiquement ensemble les deux transducteurs d'ultrasons (1.1, 1.2), une composante (16.2) du signal ultrasonique transmise du premier transducteur d'ultrasons (1.1, 1.2) vers le deuxième transducteur d'ultrasons (1.1, 1.2) à travers la substance acoustique (2) pouvant être modifiée par la substance acoustique (2), et cette composante (16.2) modifiée du signal ultrasonique pouvant être identifiée en tant que signal de contrôle avec l'unité d'interprétation, **caractérisé en ce que** la substance acoustique (2) comprend une première bague d'accueil (6.1) et une deuxième bague d'accueil (6.2) destinées à accueillir les transducteurs d'ultrasons (1.1, 1.2), la substance acoustique présentant une âme de liaison (7) qui relie la première bague d'accueil (6,1) avec la deuxième bague d'accueil (6.2).

2. Détecteur à ultrasons (S) selon la revendication 1, **caractérisé en ce que** la substance acoustique (2) est disposée dans un espace creux ouvert unilatéralement entre le porte-détecteur (3) et au moins l'un des deux transducteurs d'ultrasons (1.1, 1.2).

3. Détecteur à ultrasons selon l'une des revendications précédentes, **caractérisé en ce que** la substance acoustique (2) comprend une matière plastique.

4. Détecteur à ultrasons (S) selon l'une des revendications précédentes, **caractérisé en ce qu'**au moins l'un des transducteurs d'ultrasons (1.1, 1.2) est surmoulé dans la substance acoustique (2).

5. Détecteur à ultrasons (S) selon l'une des revendications précédentes, **caractérisé en ce qu'**au moins l'un des transducteurs d'ultrasons (1.1, 1.2) est insèré dans la substance acoustique.

6. Détecteur à ultrasons (S) selon l'une des revendications précédentes, **caractérisé en ce que** les transducteurs d'ultrasons (1.1, 1.2) font saillie hors du porte-détecteur (3), notamment de 1 à 12 mm.

7. Détecteur à ultrasons (S) selon l'une des revendications précédentes, **caractérisé en ce qu'**un écart entre les transducteurs d'ultrasons (1.1, 1.2) est égal à 20 % à 80 % d'une longueur (L) du détecteur à ultrasons (S).

8. Détecteur à ultrasons (S) selon l'une des revendications précédentes, **caractérisé en ce que** l'un des transducteurs d'ultrasons (1.1, 1.2) est un transducteur émetteur (1.1) et l'autre est un transducteur récepteur (1.2).

9. Détecteur à ultrasons (S) selon l'une des revendications précédentes, **caractérisé en ce qu'**un angle entre une direction d'orientation du transducteur émetteur (1.1) et une direction d'orientation du transducteur récepteur (1.2) est compris entre 0 et 20 degrés.

10. Procédé de contrôle du fonctionnement d'un détecteur à ultrasons (S) selon l'une des revendications 1 à 9, un signal ultrasonique étant émis depuis un premier transducteur d'ultrasons (1.1, 1.2) du détecteur à ultrasons (S) et étant reçu par un deuxième transducteur d'ultrasons (1.1, 1.2) du détecteur à ultrasons (S), une première composante (16.1) du signal ultrasonique étant transmise en dehors du détecteur à ultrasons (S) du premier au deuxième transducteur d'ultrasons (1.1, 1.2), **caractérisé en ce qu'**une deuxième composante (16.2) du signal ultrasonique est transmise du premier au deuxième transducteur d'ultrasons (1.1, 1.2) à travers une substance acoustique (2) qui relie acoustiquement ensemble les deux transducteurs d'ultrasons (1.1, 1.2), la substance acoustique (2) modifiant la deuxième composante (16.2) du signal ultrasonique et la deuxième composante (16.2) du signal ultrasonique modifiée par la substance acoustique étant identifiée dans un signal de contrôle reçu par le deuxième transducteur d'ultrasons (1.1, 1.2).

11. Procédé de fabrication d'un détecteur à ultrasons (S) comprenant un transducteur émetteur (1.1) et un transducteur récepteur (1.2), le transducteur émetteur (1.1) et le transducteur récepteur (1.2) étant montés sur un porte-détecteur (3) commun, et une substance acoustique (2) étant introduite dans un espace creux ouvert unilatéralement entre les transducteurs (1.1, 1.2) et le porte-détecteur (3), la substance acoustique (2) étant introduite dans l'espace creux notamment dans un état liquide et étant ensuite au moins partiellement durcie, **caractérisé en ce que** les transducteurs d'ultrasons (1.1, 1.2) sont introduits dans une première bague d'accueil (6.1) et dans une deuxième bague d'accueil (6.2) de la substance acoustique (2), une âme de liaison (7) reliant la première bague d'accueil (6.1) avec la deuxième bague d'accueil (6.2).

12. Procédé de fabrication d'un détecteur à ultrasons (S) comprenant un transducteur émetteur (1.1) et un transducteur récepteur (1.2), le transducteur émetteur (1.1) et le transducteur récepteur (1.2) étant montés sur un porte-détecteur (3) commun, et une substance acoustique (2) solide munie de deux évidements pour transducteur étant introduite dans un espace creux ouvert unilatéralement entre les transducteurs (1.1, 1.2) et le porte-détecteur (3), le transducteur émetteur (1.1) et le transducteur récepteur (1.2) étant respectivement fixés pour l'essentiel sans jeu dans un évidement pour transducteur, **caractérisé en ce que** les transducteurs d'ultrasons (1.1, 1.2) sont introduits dans une première bague d'accueil (6.1) et dans une deuxième bague d'accueil (6.2) de la substance acoustique (2), une âme de liaison (7) reliant la première bague d'accueil (6.1) avec la deuxième bague d'accueil (6.2).
